# EUROPÄISCHE PATENTSCHRIFT

(11) **EP 0 787 049 B1**
(45) Veröffentlichungstag und Bekanntmachung des Hinweises auf die Patenterteilung: **28.03.2001**
(21) Anmeldenummer: 95928968.7
(22) Anmeldetag: 19.08.1995
(51) Int. Cl.: B23B 27/14

(54) **VIELECKIGER SCHNEIDEINSATZ**
POLYGONAL CUTTING INSERT
PLAQUETTE DE COUPE POLYGONALE

(30) Priorität: 17.10.1994 DE 4437093
(43) Veröffentlichungstag der Anmeldung: 06.08.1997
(73) Patentinhaber: Widia GmbH, 45145 Essen (DE)
(72) Erfinder: AGUSTIN PAYA, José, D-45479 Mülheim (DE); BRAUN, Thomas, D-45475 Mülheim (DE)
(74) Vertreter: Vomberg, Friedhelm, Dipl.-Phys.
(86) Internationale Anmeldenummer: DE9501119
(87) Internationale Veröffentlichungsnummer: WO9611763

(56) Entgegenhaltungen:
- EP-A- 0 066 091
- DE-A- 4 239 236
- GB-A- 2 254 026

## Beschreibung

Die Erfindung betrifft einen vieleckigen Schneideinsatz mit mindestens einem auf der Spanfläche angeordneten längsrippenförmigen erhabenen Spanformelement, das im Abstand von der Schneidkante angeordnet ist und eine längliche Erstreckung mit einer hierdurch definierten Längsachse besitzt, die im wesentlichen in Spanablaufrichtung angeordnet sind, wobei das Längsrippenprofil, in Spanablaufrichtung betrachtet, ein Maximum besitzt.

Ein solcher Schneideinsatz wird beispielsweise in der
DE 42 39 236 A1 beschrieben. Die dortigen Längsrippen besitzen im Längsprofil ein Minimum und ein im hierzu schneidkantenferneren Bereich liegendes Maximum oder eine gleiche Höhe wie ein gegenüber den Schneidkanten oder -ecken erhöhtes mittleres Spanflächenplateau. Die Längsrippen können im Querschnitt eine gleichbleibende Breite entlang ihrer gesamten Längsachse aufweisen oder zu schneidkantenferneren Bereichen hin breiter werden. Mit diesen Längsrippen wird erreicht, daß bei relativ großem Anfangskrümmungsradius des ablaufenden Spanes, insbesondere, wenn der Spanformer bei kleinem Vorschub eingesetzt wird, eine möglichst große Aufbiegung des Spanes möglich ist. Durch das schneidkantenfernere Maximum wird bei großem Vorschub einem zu geringen Anfangskrümmungsradius bzw. einem zu engen Einrollen des Spanes entgegengewirkt.

Ein Schneideinsatz mit im Querschnitt parabelförmigen Längsrippen, die entlang der Schneidkante unter gleichem spitzen Winkel angeordnet sind, wird in der DE 41 18 070 A1 beschrieben. Schneideinsätze mit Längsrippen, die mindestens einen bis auf die Spanfläche reichenden Einschnitt aufweisen, beschreibt die WO 92/21467. Bekannt sind schließlich auch Schneideinsätze mit erhabenen Spanformelementen oder einem mittleren erhabenen Spanflächenplateau, die oder das nasen- oder keilförmige, in Richtung der Schneidecke oder Schneidkante weisende Vorsprünge aufweisen.

Es ist Aufgabe der vorliegenden Erfindung, einen zum Drehen, Stechen, Fräsen und artverwandten Bearbeitungen, insbesondere von Stahl und bezüglich der Spankontrolle schwer zu bearbeitenden Werkstoffen, wie hochlegierten Stählen, Titan-Aluminiumlegierungen, geeigneten Schneideinsatz zu schaffen, dessen Spanflächengeometrie beim Zerspanen den ablaufenden Span unmittelbar im schneidkantennahen Bereich formt, ohne daß der Schneideinsatz selbst durch den ablaufenden Span stark belastet wird. Der Schneideinsatz soll aufgabengemäß verschleißresistente Rippen besitzen, die auch bei Schruppbearbeitungen und werkstoffbedingter starker Reibung widerstandsfähig sind.

Diese Aufgabe wird durch den Schneideinsatz nach Anspruch 1 gelöst, der erfindungsgemäß dadurch gekennzeichnet ist, daß die Längsrippe eine der Schneidkante zugewandte Keilförmige Auflauframpe aufweist, die sich zu schneidkantenferneren Bereichen verbreitert und im Bereich des Maximums die größte Breite besitzt, daß die Längsrippe im Anschluß an das Maximum zu weiter von der Schneidkante entfernt liegenden Bereichen eine abfallende, sich verjüngende Dachfläche aufweist und daß das Maximum die Schneidkante überragt, wobei sich die Gesamtlänge der Längsrippe aus der Länge der Auflauframpe und der Länge der Dachfläche zusammensetzt. Durch diesen Schneideinsatz kann gewährleistet werden, daß der Span unmittelbar hinter der Schneidkante durch die Auflauframpe von der Spanfläche des Schneideinsatzes fortgebogen wird, wobei der Schneideinsatz nach Abgleiten des Spanes über das Maximum der Längsrippe spürbar entlastet wird. Die beschriebene Längsrippe bietet aufgrund ihrer Ausbildung eine optimale Spanführung, die einem seitlichen Ausweichen des Spanes entgegenwirkt. Andererseits wird die Reibung, die der Span auf der Spanfläche erfährt, möglichst gering gehalten.

Weiterbildungen der Erfindung sind in den Unteransprüchen beschrieben.

So besitzt die Längsrippe eine Längsachse, die zur Schneidkante unter einem Winkel zwischen 30° bis 150°, vorzugsweise 60° bis 120°, angeordnet ist. Die Ausrichtung der Längsrippe oder Längsrippen, die vorzugsweise parallel zueinander angeordnet sind, richtet sich im wesentlichen nach den Zerspanungsbedingungen und dem Spanablauf.

Damit die abfallende Dachfläche eine spürbare Entlastung im Hinblick auf die durch den ablaufenden Span erzeugte Reibung bringen kann, ist jede der Seitenkanten, welche die abfallende Dachfläche mit angrenzenden Seitenflanken der Längsrippe bildet, gegenüber der Längsachse der Längsrippe um einen Winkel zwischen 3° bis 20°, vorzugsweise 5° bis 15°, unter Bildung der genannten Dachflächenbreitenverjüngung geneigt. Die betreffenden Winkel werden in einer Draufsicht auf die Längsrippe gemessen. Vorzugsweise sind die beiderseitigen Kanten als Endlinien der Dachfläche spiegelsymmetrisch zur Längsachse angeordnet, d.h., unter absolut gleich großen Winkeln, aber mit entgegengesetzter Richtung. Sie können in Abhängigkeit des Einsatzfalles auch unsymmetrisch angeordnet sein.

Die Anfangsbreite der Auflauframpe am vorderen Längsrippenfußpunkt, das ist der schneidkantennächste Punkt, liegt zwischen 0 mm und 0,5 mm, vorzugsweise 0,2 mm bis 0,3 mm. Diese Breite vergrößert sich zu einer Breite, die im Bereich des Maximum gemessen wird, die zwischen 0,3 mm bis 1,5 mm liegt, vorzugsweise das 2- bis 4-fache der Anfangsbreite beträgt.

Um zu gewährleisten, daß der Span kurzzeitig nach Bildung an der Schneidkante von der Auflauframpe erfaßt wird, beträgt der Abstand der Längsrippe von der Schneidkante 0,03 mm bis 1 mm, vorzugsweise 0,05 mm bis 0,3 mm. Die Gesamtlänge der Längsrippe, die sich aus der Länge der Auflauframpe und der der abfallenden Dachfläche zusammensetzt, liegt zwischen 1,0 mm und 8 mm, vorzugsweise 1,5 mm bis 4 mm, wobei die Länge der Auflauframpe zwischen 0,3 mm und 1,5 mm, vorzugsweise zwischen 0,4 mm und 0,8 mm, liegt, d.h., deutlich kürzer ist als die Länge der abfallenden Dachfläche. Die Auflauframpe ist im wesentlichen eben ausgebildet und weist gegenüber der sich an die Schneidkante angrenzenden Spanfläche einen Anstiegswinkel zwischen 10° und 45°, vorzugsweise 20° bis 30°, auf. Alternativ hierzu ist es auch möglich, die Auflauframpe in Richtung der Längsachse gesehen konkav oder konvex auszubilden, wobei deren Tangentialflächen im mittleren Bereich der Auflauframpe gegenüber der sich an die Schneidkante angrenzenden Spanfläche Anstiegswinkel der vorgenannten Größe aufweisen. Das Maximum kann scharfkantig oder in Richtung der Längsachse gesehen konvex ausgebildet sein. Hierbei wird ein Radius zwischen 0,1 mm und 1 mm, vorzugsweise zwischen 0,25 mm und 0,5 mm, bevorzugt.

Die abfallende, sich verjüngende Dachfläche besitzt in Richtung der Längsachse der Längsrippe einen Neigungswinkel zwischen 5° und 40°, vorzugsweise 5° und 25°, gegenüber der sich an die Schneidkante angrenzenden Spanfläche. Bevorzugt wird ein Neigungswinkel gewählt, der gleich dem Spanwinkel, d.h., dem Winkel zwischen der Spanfläche und einer zur Bearbeitungsfläche senkrechten gedachten Linie ist. Die Längsrippen können ebene, konvexe oder konkave Dachflächen aufweisen.

Wie bereits vorstehend erwähnt, können auch mehrere Längsrippen im Bereich der maximalen Schnittiefe angeordnet sein, deren Abstand voneinandern, gemessen zwischen zwei benachbarten Maximarandpunkten 1,5 bis 5mal, vorzugsweise 1,5 bis 3mal, so groß ist wie die Breite der jeweiligen Maxima (quer zur Längsachse der Längsrippe).

Der Schneideinsatz weist Längsrippen mit an die Auflauframpe und/oder an die Dachfläche angrenzende Seitenflanken auf, die in Querrichtung zur Längsachse gesehen konkav, konvex oder im wesentlichen eben verlaufen. Insbesondere im angrenzenden Bereich an die die Längsrippe umgebende Spanfläche oder im Bereich zur Auflauframpe und/oder an die Dachfläche hin können Kantenrundungen ausgeführt sein. Die Seitenflanken besitzen Neigungswinkel gegenüber der die Längsrippe umgebenden Spanfläche oder der Schneidkantenebene, die zwischen 15° und 45°, vorzugsweise zwischen 20° und 35° liegen. Diese Neigungswinkel werden durch die Verbindungslinie zwischen dem Fußpunkt der Seitenflanke auf der Spanfläche und dem Grenzpunkt zur Auflauframpe oder Dachfläche definiert. Die Auflauframpe und/oder die Dachfläche verlaufen in Querrichtung zur Längsachse gesehen parallel zur Schneidkante oder unter einem positiven oder negativen Winkel bis zu 15°.

Der Schneideinsatz kann mit einer an die Schneidkante angrenzenden Fase versehen sein, die unter 0°, positiven oder negativen Winkeln verlauft. In Abhängigkeit der Fasenbreite ragt die Auflauframpe in den Bereich der Fase hinein.

Erfindungsgemäß liegen die Längsrippenmaxima stets über dem Schneidkanteniveau, sowohl in der Einsatzlage des Schneideinsatzes beim Zerspanen als auch in der Flachlage des Schneideinsatzes. Die Höhe, mit der das Maximum die Schneidkante am Schnittpunkt der verlängerten Längsachse mit der Schneidkante überragt, liegt zwischen 0,05 mm und 0,5 mm, vorzugsweise 0,1 mm und 0,3 mm.

Nach einer weiteren Ausgestaltung der Erfindung können entlang der Schneidkante mehrere Längsrippen unterschiedlicher Winkelanordnung, Größe, Form und Höhe angeordnet sein, wobei sich die jeweiligen Formgestaltungen im Rahmen der Grenzen bewegen, die vorstehend beschrieben sind.

Vorzugsweise besitzt der Schneideinsatz eine positive Freifläche. Die Schneidkante kann gerade, konvex, konkav oder auch wellenförmig ausgebildet sein.

Nach einer weiteren Ausgestaltung der Erfindung können neben den beschriebenen Längsrippen weitere erhabene Spanformelemente oder Spanformausnehmungen oder Spanformnuten oder Einkerbungen vorhanden sein. Hierzu wird insbesondere auf die
DE 41 41 368 A1, DE 41 18 065 A1 und DE 41 36 417 A1 verwiesen. Die Grundform des erfindungsgemäßen Schneideinsatzes kann rhombisch, quadratisch, dreieckig oder rund sein, wobei der Schneideinsatz als einseitig mit Spanformelementen auf einer einzigen Spanformfläche oder als doppelseitiger Schneideinsatz mit gegenüberliegenden Spanflächen mit Spanformelementen ausgebildet sein. Ggf. kann der einseitig verwendbare Schneideinsatz im unteren Bereich noch mit einer Spanschlag-Schutzfase ausgebildet sein.

Ausführungsbeispiele der Erfindung sind in den Zeichnungen dargestellt. Es zeigen
- Fig. 1a: eine Draufsicht auf einen rhombischen Schneideinsatz nach der vorliegenden Erfindung,
- Fig. 1b: eine Teilansicht des Schneideinsatzes nach Fig. la beim Werkstückzerspanen,
- Fig. 2: eine dreidimensionale Darstellung eines Ausschnittes des Schneideinsatzes nach der vorliegenden Efindung mit negativer Fase,
- Fig. 3: einen Ausschnitt aus einer Draufsicht eines Schneideinsatzes nach Fig. 1a, b oder 2 in einer Draufsicht auf eine Längsrippe,
- Fig. 4a, b: Schnittansichten A - A und B - B eines Schneideinsatzes nach Fig. la,
- Fig. 5a bis d: Schnittansichten entlang einer Linie C - C nach Fig. la in unterschiedlichen Ausführungsformen,
- Fig. 6a bis e: weitere Schnittansichten entlang der Linie A - A nach Fig. la in unterschiedlichen Ausführungsformen,
- Fig. 7 a, b: Ausschnitte aus einer Stirnansicht auf erfindungsgemäße Schneideinsätze in unterschiedlichen Ausführungsformen
- Fig. 8a bis c: unterschiedliche Schneidkantenverlaufsansichten, jeweils in einer Stirnansicht auf die Schneidkante,
- Fig. 9a bis c: Seitenansichten unterschiedlicher Schneideinsätze nach der vorliegenden Erfindung und
- Fig. 10: eine Teil-Draufsicht auf einen Schneideinsatz mit erfindungsgemäßen Längsrippen und weiteren Spanformelementen.

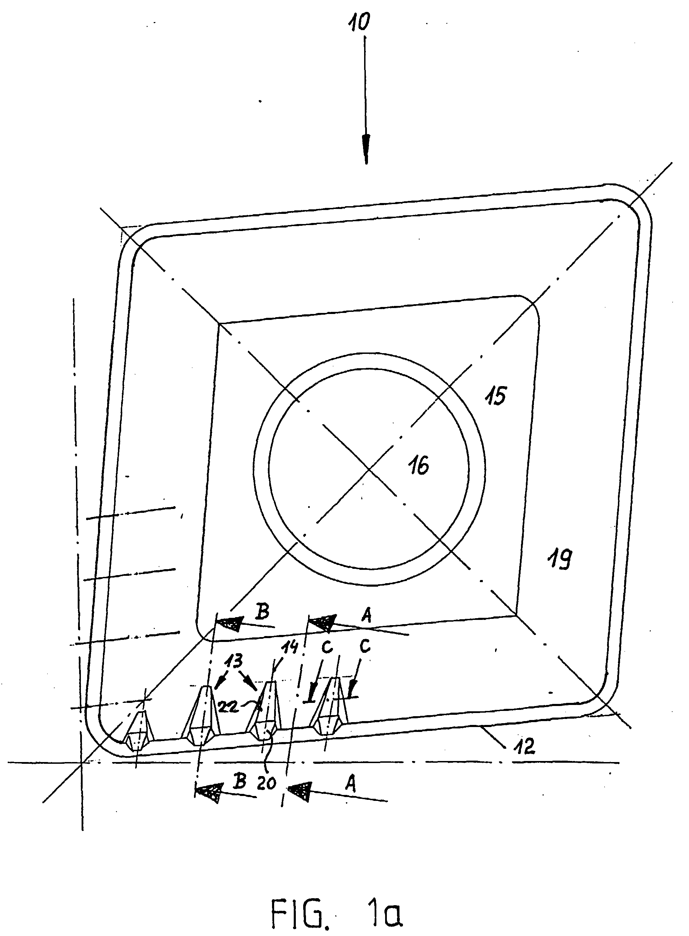

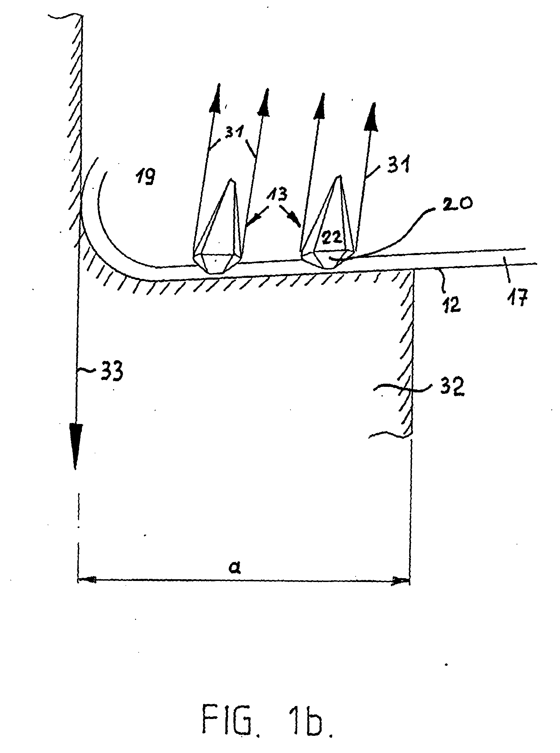

In Fig. 1a ist eine Draufsicht auf einen rhombischen Schneideinsatz 10 dargestellt, der vier Schneidecken 11 besitzt, woran sich jeweiligen Schneidkanten 12 anschließen. Entlang der Schneidkante 12, die sich an die beim Zerspanen eingesetzte Schneidecke 11 anschließen, sind mehrere parallel zueinander angeordnete Längsrippen 13 zu erkennen, die eine jeweils unter gleichen Winkeln ausgerichtete Längsachse 14 besitzen. Im vorliegenden Fall sind vier Längsrippen 13 veranschaulicht, die im Bereich der maximalen Schnittiefe (vgl. Fig. 1b) angeordnet sind. Die sich an die übrigen Schneidecken anschließenden Spanflächenabschnitte entlang jeweiliger Schneidkanten besitzen entsprechende Längsrippen (nicht dargestellt). Die Anzahl der auf der Spanfläche angeordneten Längsrippen ist nicht beschränkt, jedoch ist mindestens eine Längsrippe vorgesehen. Der Schneideinsatz kann - wie in Fig. 1a dargestellt - ein gegenüber der Schneidkantenebenen erhabenes mittleres Spanflächenplateau 15 aufweisen. Ferner besitzt der Schneideinsatz ein zentrales Befestigungsloch 16 zur Durchführung einer Spannschraube. Alternativ hierzu können jedoch auch Klemmwarzen, Spannmulden oder ähnliche, möglichst zentral angeordnete Spannelemente ausgebildet sein, die in Wechselwirkung mit entsprechenden korrespondierenden Ausgestaltungen eines Klemmfingers ein sicheres Einspannen des Schneideinsatzes in einen Werkzeughalter ermöglichen.

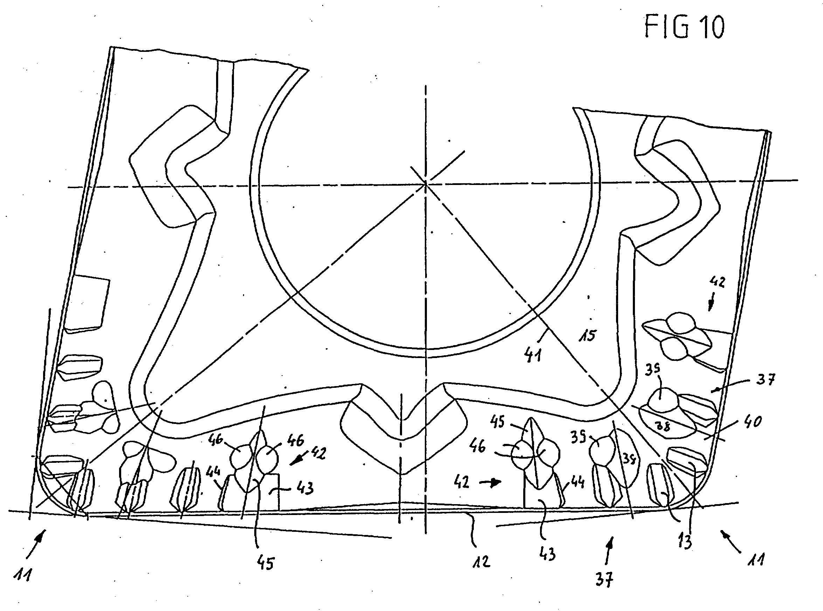

Die jeweils entlang der Schneidkante ausgerichteten Längsrippen können in ihrer Form, Größe, Ausrichtung, Anzahl und Kombination mit anderen nach dem Stand der Technik bekannten Spanformelementen variieren, wie dies beispielsweise am Schneideinsatz nach Fig. 10 noch erläutert werden wird.

Einheitlich sollen die Rippen in Spanablaufrichtung ausgerichtet sein, d.h., die Spanablaufrichtung soll die Richtung der Längsachse 14 der Spanformelemente bestimmen. Die Längsrippen 13 befinden sich mit ihrer vorderen Kante relativ nahe an der Schneidkante 12, um möglichst unmittelbar nach der Spanbildung auf den ablaufenden Span einwirken zu können. Die durch das später noch zu erläuternde Maximum geschaffenen Rippenhöchstpunkt liegen stets über dem durch die Schneidkante 12 vorgegebenen Niveau, sowohl in der Einsatzlage, bei der der Schneideinsatz in einen Werkzeughalter geklemmt und unter Einstellung eines geeigneten Spanwinkels gegenüber dem zu bearbeiteden Werkstück werkstoffabhängig ausgerichtet wird, als auch in einer Lage, bei der der Schneideinsatz auf eine flache Horizontalebene aufgelegt wird. Einheitlich bei den erfindungsgemäßen Längsrippen ist die Ausgestaltung in eine der Schneidkante 12 zugewandte Auflauframpe, die sich zu schneidkantenferneren Bereichen verbreitert. Die Auflauframpe endet in einem Maximum, woran sich zu schneidkantenferneren Bereichen eine abfallende Dachfläche anschließt, die sich zu schneidkantenferneren Bereichen hin verjüngt. Die Auflauframpe und die Dachfläche werden jeweils durch Grenzlinien seitlich begrenzt, woran sich zur Seite jeweilige Seitenflanken anschließen. Generell muß die Auflauframpe, in Spanablaufrichtung gesehen, erheblich kürzer als die abfallende Dachfläche sein. Die Auflauframpe ist ebenso wie die abfallende Dachfläche im wesentlichen keilförmig ausgebildet, wobei die Auflauframpe absolut einen größeren Anstiegswinkel besitzt als die Dachfläche geneigt ist.

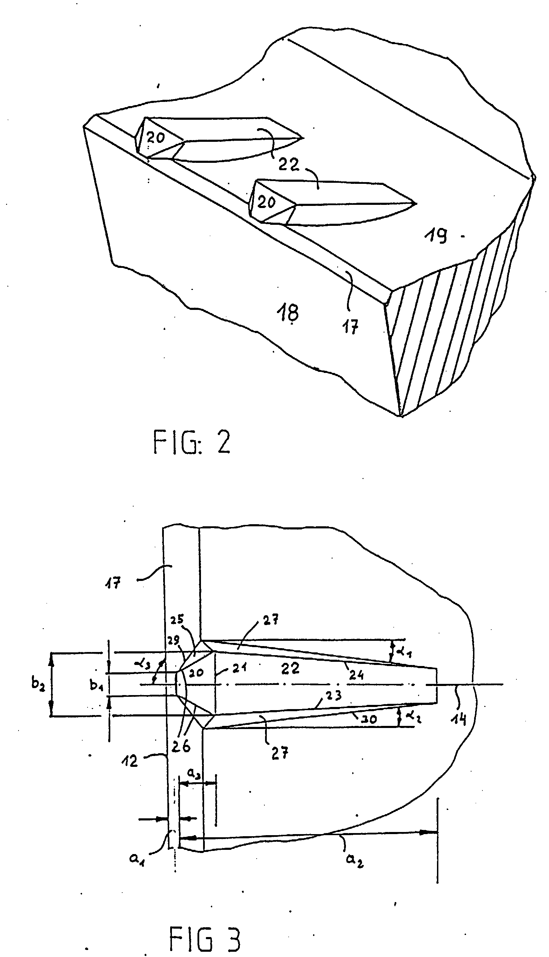

Wie in Fig. 1a, b und 2 dargestellt, kann sich an die Schneidkante 12 eine Fase 17 anschließen, die unter einem 0°-Winkel oder einem positiven oder einem negativen Winkel verläuft.
Fig. 2 zeigt eine Ausführungsform mit einer negativen Fase 17. An die Schneidkante 12 schließt sich eine Freifläche 18 an, die unter einem Freiwinkel von 0° oder einem positiven Freiwinkel angeordnet ist. Die Spanfläche 19 kann im Anschluß an die Schneidkante 12 oder eine Fase 17 zu schneidkantenferneren Bereichen abfallend ausgebildet sein oder eine Muldenform besitzen, wie dies an der Ausschnittsansicht in Fig. 2 dargestellt ist. Die Längsrippen 13 befinden sich im wesentlichen in dieser Mulde, jedoch ragt die Auflauframpe 20 zumindest zum Teil in eine etwa vorhandene Fase 17 herein.

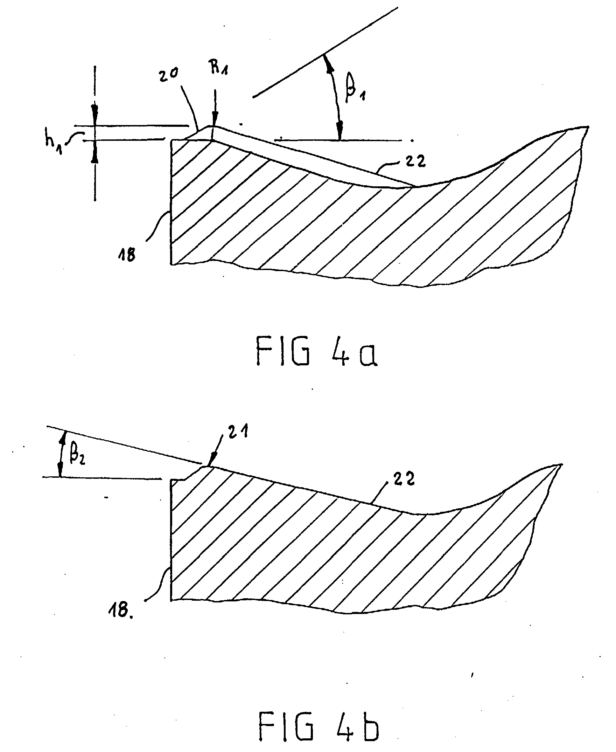

Wie insbesondere aus Fig. 2 bis 4a, b ersichtlich, hat die Längsrippe einen Abstand a₁ von der Schneidkante 12, der mindestens 0,03 mm, vorzugsweise 0,05 mm bis 0,3 mm, beträgt. Die Längsrippe 13 kann in ihrem vorderen,-der Schneidkante 12 zugewandten Bereich spitz oder mit einer Breite b₁ beginnen, d.h., die in Fig. 3 dargestellte Breite b₁ beträgt 0 mm bis 0,5 mm, vorzugsweise 0,2 mm bis 0,3 mm. Die Auflauframpe 20 verbreitert sich zu schneidkantenferneren Bereichen kontinuierlich auf eine Breite b₂, die zwischen 0,3 mm bis 1,5 mm liegt, wobei die Breite b₂ bei vorgegebener positiver Breite b₁ 2 bis 4mal so groß wie die Breite b₁ ist. Die Auflauframpe endet in einer Kante 21, die auch die maximale Erhebung der Längsrippe darstellt. Diese Kante 21 wird im folgenden als Maximum 21 bezeichnet. Zu schneidkantenferneren Bereich schließt sich an die Kante 21, die quer zur Längsachse 14 der Längsrippe 13 verläuft, eine abfallende Dachfläche 22 an, die sich nach hinten verjüngt. Das Maß der Verjüngung wird durch die Winkel α₁ und α₂ bestimmt, die zwischen 3° und 20°, vorzugsweise 5° bis 15°, liegen. Diese Winkel α₁ und α₂ werden durch die Seitenkanten 23 und 24 der Dachfläche in bezug auf die Richtung der Längsachse 14 gebildet. Die Winkel α₁ und α₂ können gleich groß oder unterschiedlich groß ausgebildet sein, wobei die Dachfläche spiegelsymmetrisch zur Längsachse oder auch asymmetrisch wird. Die Gesamtlänge α₂ der Längsrippe liegt zwischen 1 mm und 8 mm, vorzugsweise 1,5 mm bis 4 mm. Die Länge a₃ der Auflauframpe 20 liegt hierbei zwischen 0,3 mm und 1,5 mm, mit der Maßgabe, daß die Länge der Dachfläche 22 deutlich größer als die Länge a₃ der Auflauframpe 20 ausgebildet ist, beispielsweise das Maß a₂ - a₃ mehr als 5mal größer als a₃ ist. Seitlich der Auflauframpe 20 besitzt die Längsrippe Seitenflanken 25, die mit der Auflauframpe 20 jeweils eine gemeinsame Kante 26 bilden. Die Kante 26 bildet jeweils mit der Längsachse 14 einen Winkel α₃, der hier ca. 30° beträgt. Dieser Winkel wird durch die jeweiligen Breiten b₁ und b₂ sowie die Länge a₃ der Auflauframpe bestimmt. Seitlich der Kanten 23 und 24 schließen sich an die Dachfläche 22 Seitenflanken 27 an, deren Breite sich konstruktionsgemäß (vgl. Draufsicht nach Fig. 3) zu schneidkantenferneren Bereichen auf 0 verjüngt, da die Dachflanke zu schneidkantenferneren Bereichen stärker abfällt als die die Längsrippe umgebende Spanfläche. Die Dachfläche 22 läuft im vorliegenden Fall bei 28 in der Spanfläche aus. Die Winkelausrichtung der unteren Kanten 29 und 30 der Seitenflanken 25 und 27 wird durch die Flankenwinkel γ₁ und γ₂ entsprechend Fig. 5a bestimmt, die zwischen 15° und 45°, vorzugsweise 20° und 35°, liegen. Die Winkel γ₁ und γ₂ können gleich groß oder auch verschieden sein. Die Längsachse 14 bildet mit der Schneidkante 12 einen Winkel α₄, der zwischen 30° und 150°, vorzugsweise zwischen 60° und 120°, liegt. Der Winkel der Längsachse 14 wird im wesentlichen durch die Spanablaufrichtung 31 (siehe Fig. 1b) bestimmt.

Sind, wie Fig. 1a, b und Fig. 2 zu entnehmen, mehrere Längsrippen, vorzugsweise parallel zueinander entlang der Schneidkante 12 angeordnet, so beträgt deren Abstand b₃, der zwischen jeweilig benachbarten Endpunkten des Maximums 21 gemessen wird. Dieser Abstand ist 1,5 bis 5mal, vorzugsweise bis 3mal, so groß wie das vorbeschriebene Maß b₂. Die Auflauframpe 20 ragt zumindest teilweise in den Bereich herein, der durch die Fase 17 vorgegeben ist, vorzugsweise dergestalt, daß die der Auflauframpe 20 benachbarten Seitenflanken 25 mit der Fase 17 nach hinten abschließen. Die Längsrippen 13 bzw. deren Längsachse 14 sind rechtwinklig oder unter einem spitzen Winkel zur Schneidkante angeordnet. Die Verlängerung der Längsachse 14 kann jedoch auch auf den Scheitelpunkt der Schneidecke 11 gerichtet sein. In Fig. 1b ist ein Schneideinsatz im Zerspanungseinsatz eines Werkstückes 32 dargestellt. Der Pfeil 33 zeigt die Vorschubrichtung des Schneideinsatzes relativ zum Werkstück 32, das spanend mit einer maximalen Schnittiefe a bearbeitet wird. Im Bereich dieser Schnittiefe a ist entlang der Schneidkante 12 mindestens eine Längsrippe 13 vorgesehen, deren Längsachse 14 in Spanablaufrichtung 31, d.h., parallel hierzu ausgerichtet ist. Der ablaufende Span wird in unmittelbarer Nähe der Schneidkante durch die Auflauframpe 20 geformt, jedoch wird der Schneideinsatz durch die sich verjüngende Dachfläche 22 spürbar entlastet. Hierdurch ist einerseits gewährleistet, daß die aufzuwendende Kraft zur Ablenkung des Spanes relativ gering bleibt, andererseits die Längsrippen auch bei Schruppbearbeitungen und werkstoffbedingten Reibungen verschleißfest sind.

Die Schnittansichten nach Fig. 4a und b zeigen, daß das Längsrippenprofil dachförmig ausgestaltet ist. Der Winkel β₁ der Auflauframpe 20 liegt zwischen 10° und 45°, vorzugsweise zwischen 20° und 30°, während der Winkel β₂, den die Dachfläche 22 mit der Schneidkantenebene bildet, zwischen 5° und 40°, vorzugsweise 5° und 15° liegt. Der Winkel β₂ kann parallel dem Spanwinkel sein. Das Ende der Auflauframpe bildet das Maximum 21, wobei die betreffende Kante auch abgerundet sein kann, mit einem Kantenradius zwischen 0,1 mm und 1 mm, vorzugsweise 0,25 mm und 0,5 mm. Das Maximum 21 liegt relativ zur Schneidkante 12 in einem Abstand h₁ zwischen 0,05 mm und 0,5 mm, vorzugsweise 0,1 mm und 0,3 mm.

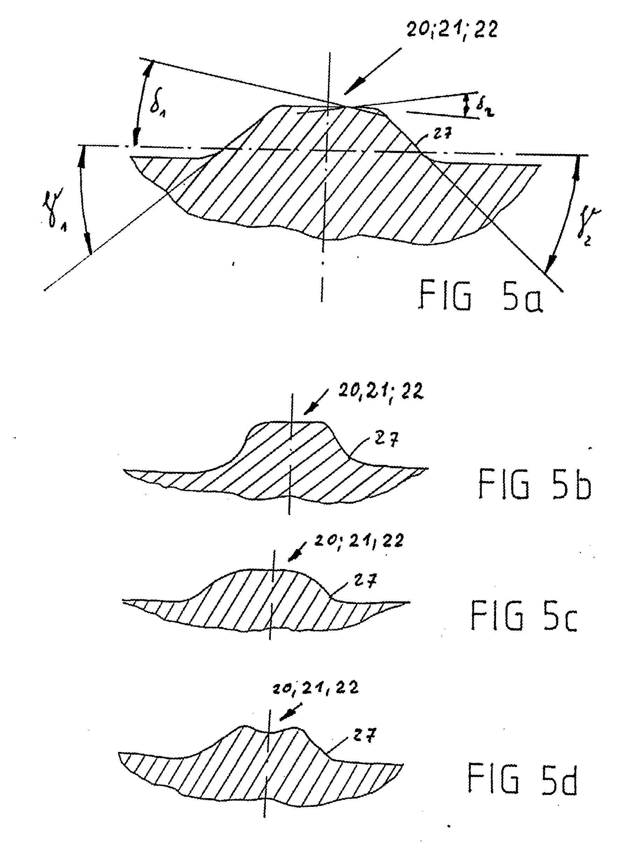

Fig. 5a bis d zeigen Querschnittsansichten entlang Schnitten senkrecht zur Rippenachse im Bereich der abfallenden Dachfläche 22. Für den Bereich der Auflauframpe 20 und das Maximum 21 gilt jedoch entsprechendes. Die Dachfläche 22 kann eben oder auch konkav (siehe Fig. 5d) ausgebildet und parallel oder auch unter positiven Winkeln δ₁ oder negativen Winkeln δ₂ ausgerichtet sein. Die Seitenflanken 27 sind eben (Fig. 5a), konkav (Fig. 5b) oder auch konvex (Fig. 5c) ausgestaltet, jeweils unter den bereits vorstehend behandelten Flankenwinkeln γ₁ und γ₂. Bei konkaven oder konvexen Flanken wird der Neigungswinkel γ durch die Verbindungslinie der Grenzfläche 30 und der oberen Kante 24 bzw. der Kanten 29 und 26 bestimmt.

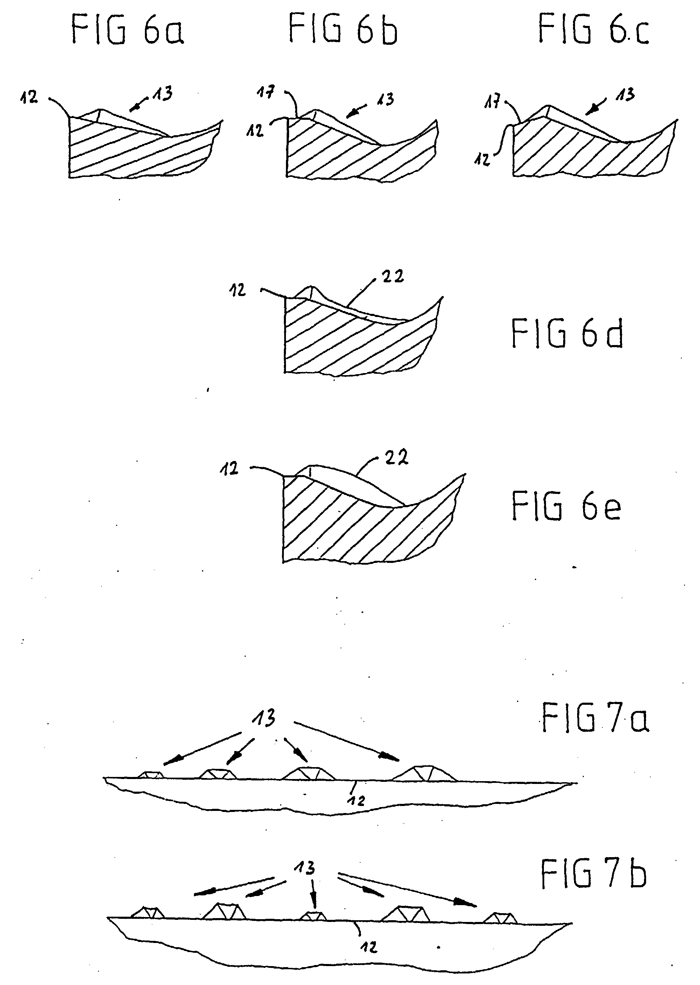

Fig. 6a bis e zeigen unterschiedliche Spanflächen und Längsrippenprofilausbildungen. Die Spanfläche kann ohne Fase (Fig. 6a), mit einer 0°-Fase (Fig. 6b) oder einer negativen Fase (Fig. 6c) ausgebildet sein. Das Längsrippenprofil ist im Bereich der Dachfläche 22 eben, konkav (Fig. 6d) oder konvex (Fig. 6e) ausgebildet, jeweils in Richtung der Längsachse 14 betrachtet. Die die Längsrippen 13 umgebende Spanfläche, ggf. im Anschluß an eine Fase 17 ist nach hinten abfallend ausgebildet, insbesondere unter Bildung einer Spanformmulde 34.

Von der Schneidecke 11 in Richtung der Schneidkante 12 betrachtet kann die Rippenhöhe h₁ anwachsend oder abfallend oder auch alternierend ausgestaltet sein, wie dies Fig. 7a und b zu entnehmen ist. Im Sinne der vorliegenden Erfindung können bei Anordnung von mehreren Längsrippen 13 auf der Spanfläche eines Schneideinsatzes 10 von Rippe zu Rippe sämtliche Winkelmaße α₁ bis α₄, β₁, β₂, γ₁, γ₂, δ₁ und δ₂ sowie die Längen a₁ bis a₃ und die Breiten b₁ und b₂ in oben beschriebenen Grenzen variieren. Entsprechendes gilt für die Abstände b₃ der Längsrippen voneinander.

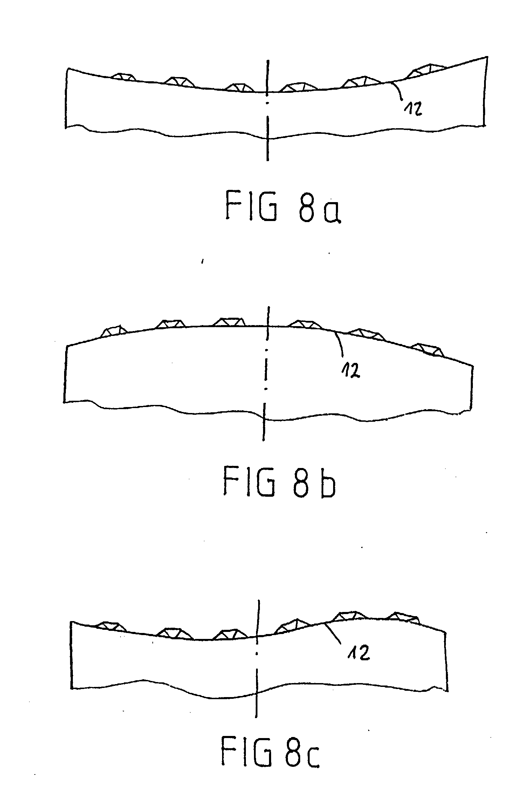

Die Schneidkante 12 kann zur Schneidecke 11 hin einen positiven Neigungswinkel (Fig. 8a), einen negativen Neigungswinkel (Fig. 8b) oder auch eine geschwungene Wellenform (Fig. 8c) aufweisen. Hieraus ergeben sich entsprechende konvexe, konkave oder alternierende Schneidkantenverläufe.

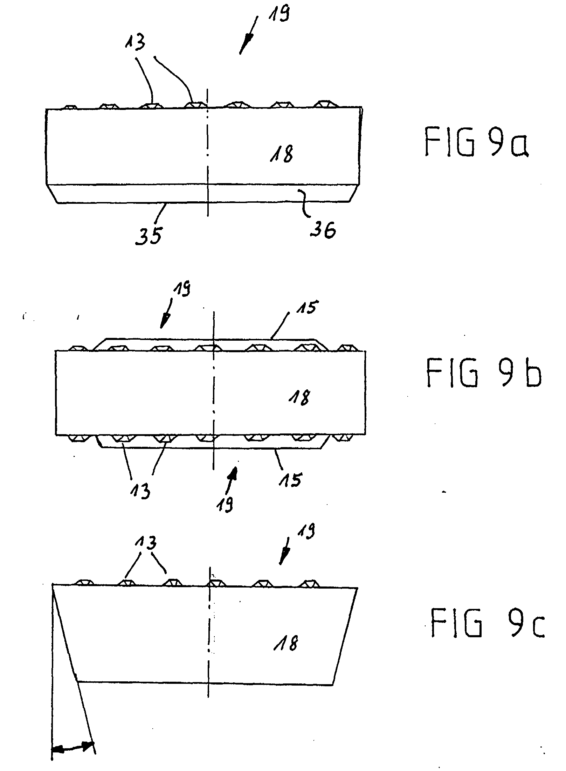

Wird der Schneideinsatz 10 als sogenannter einseitiger Schneideinsatz entsprechend Fig. 9, d.h., mit nur einer Spanfläche 19 ausgebildet, die einer Auflagefläche 35 gegenüberliegt, kann der Schneideinsatz zusätzlich eine Spanschlagschutzfase 36 im an die Bodenfläche 35 angrenzenden Bereich aufweisen. Bei Ausbildung eines doppelseitig verwendbaren Schneideinsatzes entsprechend Fig. 9 sind mittlere Plateaus 15 an der oberen und unteren Spanfläche ausgebildet, welche die Spanformelemente, insbesondere die Längsrippen 13 überragen. Diese Plateaus 15 dienen als Auflage im Werkzeughalter. Fig. 9c zeigt einen Schneideinsatz mit positiver Freifläche 18.

In der Ausführungsform des Schneideinsatzes nach Fig. 10 weist die Spanfläche unterschiedliche Spanformelemente auf, d.h., neben den bereits beschriebenen Längsrippen 13 noch weitere Spanformelemente. Im vorliegenden Fall sind jeweils im Bereich einer Schneidecke zwei Längsrippen 13 vorgesehen, deren Längsachsen bzw. Längsachseverlängerungen sich mit der auslaufenden Schneidecke 11 schneiden. Hieran schließen sich jeweils zu beiden Seiten Längsrippen 37 an, die im vorderen Bereich entsprechend den zuvor beschriebenen Längsrippen ausgebildet sind. In schneidkantenferneren Bereichen sind jedoch weitere Erhebungen 38 und 39 vorgesehen, wobei die Erhebung 38 im wesentlichen ebenfalls eine Längsrippe darstellt, die jedoch im Unterschied zu den erfindungsgemäßen Längsrippen eine abgerundete obere Kante besitzt. Zu der schneidkanten abgewandten Seite schließt sich seitlich ein teilkugelförmiges Element 39 als quer zu der Längsachse 40 der Erhebung 38 liegendes Element an. Die Spanformelemente 37 bis 39 sind, bezogen auf eine Schneideckenhalbierende 41, spiegelsymmetrisch angeordnet. Zu schneideckenferneren Bereichen ist ferner ein weiteres rippenförmiges Element 42 vorgesehen, das eine Dachfläche 43 aufweist, die, bezogen auf die Schneidkantenebene, schräg verläuft und im Bereich der Spanfläche ausläuft, so daß nur einseitig, d.h., auf der der Schneideckenhalbierenden 41 zugewandten Seite eine Flanke 44 vorgesehen ist. Diese Rippe 42 bis 44 stellt eine Abwandlung der erfindungsgemäßen Rippe 13 dergestalt dar, daß sie eine derart schiefwinklig angeordnete Auflauframpe und Dachfläche besitzt, daß sie quasi nur als halbe Rippe dient. Im schneidkantenferneren Bereich schließt sich eine im Querschnitt parabelförmige Rippe 45 an, die beidseitig jeweils teilkugelförmige Vorsprünge 46 aufweist.

Der in Fig. 10 dargestellte Schneideinsatz besitzt ferner ein mittleres Plateau 15, das im Bereich der Schneidkantenmitte vorstehende Teile 47 aufweist, die zur besseren Abstützung des Plateaus bei Auflage in einem Werkzeughalter dienen. Diese Schneidplatte ist als Wendeschneidplatte mit gegenüberliegenden Spanflächen ausgestaltet.

## Patentansprüche

1. Vieleckiger Schneideinsatz (10) mit mindestens einem auf der Spanfläche (19) angeordneten längsrippenförmigen erhabenen Spanformelement (13), das im Abstand von der Schneidkante (12) angeordnet ist und eine längliche Erstreckung mit einer hierdurch definierten Längsachse (14) besitzt, die im wesentlichen in Spanablaufrichtung (31) angeordnet ist, wobei das Längsrippenprofil, in Spanablaufrichtung (31) betrachtet, ein Maximum (21) besitzt,
**dadurch gekennzeichnet,**
daß die Längsrippe (13) eine der Schneidkante (12) zugewandte keil förmige Auflauframpe (20) aufweist, die sich zu schneidkantenferneren Bereichen verbreitert und im Bereich des Maximums (21) die größte Breite (b₂) besitzt, daß die Längsrippe (13) im Anschluß an das Maximum (21) zu weiter von der Schneidkante (12) entfernt liegenden Bereichen eine abfallende, sich verjüngende Dachfläche (22) aufweist und daß das Maximum (21) die Schneidkante (12) überragt, wobei sich die Gesamtlänge der Längsrippe (13) aus der Länge der Auflauframpe (20) und der Länge der Dachfläche (22) zusammensetzt.

2. Schneideinsatz nach Anspruch 1, dadurch gekennzeichnet, daß die Längsachse (14) der Längsrippe (13) zur Schneidkante (12) unter einem Winkel (α₄) zwischen 30° und 150°, vorzugsweise 60° und 120°, angeordnet ist und/oder daß die abfallende Dachfläche (22) mit angrenzenden Seitenflanken (27) jeweils eine Kante (23, 24) bildet, die gegenüber der Längsachse (14) um einen Winkel (α₁, α₂) zwischen 3° und 20°, vorzugsweise 5° und 15°, unter Bildung einer Dachflächenbreitenverjüngung geneigt ist, wobei weiterhin vorzugsweise die beiderseitigen Kanten (23, 24) absolut unter gleich großen Winkeln (α₁, α₂), aber in entgegengesetzter Richtung angeordnet sind.

3. Schneideinsatz nach einem der Ansprüche 1 oder 2, dadurch gekennzeichnet, daß die Anfangsbreite (b₁) der Auflauframpe (20) am vorderen Längsrippenfußpunkt zwischen 0,0 mm und 0,5 mm, vorzugsweise 0,2 mm und 0,3 mm, liegt und sich zu einer Breite (b₂) im Bereich des Maximums (21) von 0,3 mm bis 1,5 mm, vorzugsweise zur 2- bis 4-fachen Anfangsbreite (b₁) vergrößert und/oder daß der
Abstand (a₁) der Längsrippe (13) von der Schneidkante (12) zwischen 0,03 mm und 1 mm, vorzugsweise zwischen 0,5 mm und 0,3 mm, beträgt und/oder daß die Länge (a₂) der Längsrippe (13) zwischen 1,0 mm und 8,0 mm, vorzugsweise 1,5 mm und 4 mm, und die Länge (a₃) der Auflauframpe (20) zwischen 0,3 mm und 1,5 mm, vorzugsweise zwischen 0,4 mm und 0,8 mm, liegt.

4. Schneideinsatz nach einem der Ansprüche 1 bis 3, dadurch gekennzeichnet, daß die Auflauframpe (20) im wesentlichen eben ausgebildet ist und gegenüber der sich an die Schneidkante (12) angrenzenden Spanfläche (19) einen Anstiegswinkel (β₁) zwischen 10° und 45°, vorzugsweise zwischen 20° und 30°, aufweist und/oder daß die Auflauframpe (20) in Richtung der Längsachse (14) konkav oder konvex ausgebildet ist und daß deren Tangentialflächen im mittleren Bereich der Auflauframpe gegenüber der sich an die Schneidkante 12 angrenzenden Spanfläche Anstiegswinkel (β₁) zwischen 10° und 45° aufweisen.

5. Schneideinsatz nach einem der Ansprüche 1 bis 4, dadurch gekennzeichnet, daß die Längsrippe (13) im Bereich ihres Maximums (21) in Richtung ihrer Längsachse (14) konvex ausgebildet ist, vorzugsweise unter einem Radius (R₁) zwischen 0,1 mm und 1 mm, weiter vorzugsweise unter einem Radius (R₁) zwischen 0,25 mm und 0,5 mm und/oder daß die abfallende, sich verjüngende Dachfläche (22) einen Neigungswinkel (β₂) zwischen 5° bis 40°, vorzugsweise zwischen 5° und 15°, gegenüber der sich an die Schneidkante (12) angrenzenden Spanfläche (19) aufweist, wobei weiterhin vorzugsweise der Neigungswinkel (β₂) gleich dem Spanwinkel ist.

6. Schneideinsatz nach einem der Ansprüche 1 bis 5, dadurch gekennzeichnet, daß die Längsrippen (13) eine konvexe oder konkave Dachfläche (22) aufweisen und/oder daß der Abstand (b₃) der Längsrippen (13) voneinander, gemessen zwischen zwei benachbarten Maximarandpunkten 1,5mal bis 5mal, vorzugsweise 1,5mal bis 3mal, so groß wie die Breite (b₂) der Maxima (21) ist und/oder daß die Längsrippe (13) an die Auflauframpe (20) und/oder an die Dachfläche (22) angrenzende Seitenflanken (25, 27) aufweist, die in Querrichtung zur Längsachse (14) gesehen konkav, konvex oder im wesentlichen eben verlaufen.

7. Schneideinsatz nach einem der Ansprüche 1 bis 6, dadurch gekennzeichnet, daß die Seitenflanken (25, 27) in Querrichtung zur Längsachse (14) gesehen einen durch die Verbindungslinie zwischen ihrem Fußpunkt (29, 30) auf der Spanfläche (19) und dem Grenzpunkt (26, 24) zur Auflauframpe (20) oder Dachfläche (22) bestimmten Neigungswinkel (γ₁, γ₂) gegenüber der die Längsrippe (13) umgebenden Spanfläche (19) oder der Schneidkantenebene zwischen 15° und 45°, vorzugsweise zwischen 20° und 35°, aufweisen und/oder daß die Auflauframpe (20) und/oder die Dachfläche (22) in Querrichtung zur Längsachse (14) zur Schneidkante (12) parallel verlaufen oder unter einem positiven oder negativen Winkel (δ₁, δ₂) bis zu 15° geneigt sind, vorzugsweise bis zur Spanfläche (19) unter Wegfall von Seitenflanken (25, 27) auf einer Seite auslaufen.

8. Schneideinsatz nach einem der Ansprüche 1 bis 7, dadurch gekennzeichnet, daß an die Schneidkante (12) eine 0°-, positive oder negative Fase (17) angrenzt, in deren Bereich die Auflauframpe (20) hineinragt und/oder daß das Maximum (21) die Schneidkante (12) um eine Höhe (h₁) zwischen 0,05 mm bis 0,5 mm, vorzugsweise zwischen 0,1 mm und 0,3 mm, überragt und/oder daß entlang der Schneidkante (12) mehrere Längsrippen (13) unterschiedlicher Winkelanordnung, Form und Höhe angeordnet sind.

9. Schneideinsatz nach einem der Ansprüche 1 bis 8, gekennzeichnet durch eine positive Freifläche (18) und/oder daß die Schneidkanten (12) gerade, konvex, konkav oder wellenförmig ausgebildet sind.

10. Schneideinsatz nach einem der Ansprüche 1 bis 9, dadurch gekennzeichnet, daß neben den Längsrippen (13) weitere erhabene Spanformelemente (37 bis 39), (45, 46) oder Spanformausnehmungen oder Spanformnuten vorhanden sind.

## Claims

1. Polygonal cutting insert (10) with at least one longitudinally rib-shaped cutting element (13) on the rake face (19) arranged at a distance from the cutting edge (12) and extending longitudinally with a longitudinal axis (14) defined thereby and arranged substantially in the chip removal direction (31), whereby the longitudinal rib profile seen in the chip removal direction (31) has a maximum (21),
**characterized in that**
the longitudinal rib (13) has an ascending wedge-shaped slope (20) facing the cutting edge (12), which broadens towards the regions away from the cutting edge and has the greatest width (b₂) in the region of the maximum (21), the longitudinal rib (13) has a descending and narrowing upper surface (22) from the maximum (21) to the regions further away from the cutting edge (12) and the maximum (21) projects beyond the cutting edge (12), whereby the total length of the longitudinal rib (13) is made up by the length of the rising slope (20) and the length of the upper surface (22).

2. Cutting insert according to claim 1, characterized in that the longitudinal axis (14) of the longitudinal rib (13) is arranged at an angle (α₄) ranging between 30° and 150°, preferably 60° and 120°, with respect to the cutting edge (12) and/or that the descending upper surface (22) forms an edge (23, 24) with each of the adjoining flanks (27), which is inclined with respect to the longitudinal axis (14) by an angle (α₁, α₂) between 3° and 20°, preferably 5° and 15°, while creating on the upper surface a region narrowing in width, whereby furthermore preferably the edges (23, 24) on both sides are arranged at absolutely identical angles (α₁, α₂), but in opposite directions.

3. Cutting insert according to one of claims 1 or 2, characterized in that the initial width (b₁) of the ascending slope (20) at the frontal foot of the longitudinal rib ranges between 0,0 mm and 0,5 mm, preferably 0,2 mm and 0,3 mm, and increases to a width (b₂) of 0,3 mm to 1,5 mm, preferably to 2 to 4 times the initial width (b₁) in the region of the maximum (21) and/or that the distance (a₁) of the longitudinal rib (13) from the cutting edge (12) ranges between 0,03 mm and 1 mm, preferably between 0,5 mm and 0,3 mm and/or that the length (a₂) of the longitudinal rib (13) is between 1,0 mm and 0,8 mm, preferably between 1,5 mm and 4 mm, and the length (a₃) of the ascending slope (20) is between 0,3 mm and 1,5 mm, preferably between 0,4 mm and 0,8 mm.

4. Cutting insert according to one of claims 1 to 3, characterized in that the ascending slope (20) is essentially flat and has an angle of ascent (β₁) with respect to the rake face (19) bordering on the cutting edge (12) which ranges between 10° and 45°, preferably 20° and 30° and/or that the ascending slope (20) in the direction of the longitudinal axis (14) is concave or convex and that its tangential surfaces in the median region of the ascending slope have angles of ascent (β₁) between 10° and 45° with respect to the rake face region bordering the cutting edge (12).

5. Cutting insert according to one of claims 1 to 4, characterized in that the longitudinal rib (13) in the region of its maximum (21) in direction of its longitudinal axis (14) is convex, preferably with a radius (R₁) between 0,1 mm and 1 mm, further preferably with a radius (R₁) between 0,25 and 0,5 mm and/or that the descending and narrowing upper surface (22) has an angle of inclination (β₂) between 5° to 40°, preferably between 5° and 15°, with respect to the rake face (19) bordering the cutting edge (12), whereby furthermore preferably the angle of inclination (β₂) is equal to the rake angle.

6. Cutting insert according to one of claims 1 to 5, characterized in that the longitudinal ribs (13) have a convex or concave upper surface (22) and/or that the distance (b₃) between the longitudinal ribs (13), measured between two neighboring maxima margin points is 1,5 to 5 times, preferably 1,5 to 3 times bigger than the width (b₂) of the maxima (21) and/or that the longitudinal rib (13) has lateral flanks (25, 27) bordering on the ascending slope (20) and/or on the upper surface (22), which considered in transverse direction to the longitudinal axis (14) are concave, convex or essentially flat.

7. Cutting insert according to one of claims 1 to 6, characterized in that the lateral flanks (25, 27), considered in transverse direction to the longitudinal axis (14), have an angle of inclination (γ₁, γ₂) defined by the connection line between its foot point (29, 30) on the rake face (19) and the border point (26, 24) towards the ascending slope (20) or the upper surface (22) with respect to the rake face (19) surrounding the longitudinal rib (13) or to the cutting edge plane, which ranges between 15° and 45°, preferably between 20° and 35° and/or that the rising slope (20) and/or the upper surface (22) in transverse direction to the longitudinal axis (14) run parallelly to the cutting edge (12) or are inclined at a positive or negative angle (δ₁, δ₂) of up to 15°, preferably taper off towards the rake face (19) by eliminating the lateral flanks.

8. Cutting insert according to one of claims 1 to 7, characterized in that a 0°, positive or negative land (17) borders the cutting edge (12), the ascending slope (20) reaching into the land region and/or that the maximum (21) surpasses the cutting edge (12) by a height (h₁) between 0,05 mm to 0,5 mm, preferably between 0,1 mm and 0,3 mm and/or that along the cutting edge (12) several longitudinal ribs (13) of various angular position, shape and height are arranged.

9. Cutting insert according to one of claims 1 to 8, characterized by a positive clearance face (18) and/or that the cutting edges (12) are straight, convex, concave or wavy.

10. Cutting insert according to one of claims 1 to 9, characterized in that in addition to the longitudinal ribs (13) further raised cutting elements (37 to 39), (45, 46) or chip-forming recesses or chip-forming grooves are provided.

## Revendications

1. Insert de coupe polygonal (10) avec du moins un élément élevé à former le copeau (13) en forme de nervure longitudinale qui est disposé sur la face de coupe (19) et à une distance du tranchant (12) et qui présente une extension longitudinale avec un axe longitudinal (14) défini de cette manière qui est disposé pour l'essentiel dans la direction d'ecoulement (31) du copeau, le profil de la nervure longitudinale, vu dans la direction d'écoulement de copeau (31), présentant un maximum (21),
**caractérisé par le fait que**
la nervure longitudinale (13) présente une rampe cunéiforme de montée (20) qui montre vers le tranchant (12) et s'élargit vers des zones situées plus loin du tranchant et qui présente la plus grande largeur (b₂) dans la zone du maximum (21), que la nervure longitudinale (13) présente à la suite du maximum (21), vers des zones situées plus loin du tranchant (12), une surface supérieure (22) inclinée se rétrécissant et que ledit maximum (21) dépasse le tranchant (12), la longueur totale de la nervure longitudinale (13) se composant de la longueur de la rampe de montée (20) et de la longueur de ladite surface supérieure (22).

2. Insert de coupe selon la revendication 1, caractérisé par le fait que l'axe longitudinal (14) de la nervure longitudinale (13) est disposé par rapport au tranchant (12) sous un angle (α₄) compris entre 30° et 150°, de préférence entre 60° et 120°, et/ou que la surface supérieure inclinée (22) forme avec des flancs latéraux contigus (27) respectivement une arête (23, 24) qui est inclinée par rapport à l'axe longitudinal (14) d'un angle (α₁, α₂) compris entre 3° et 20°, de préférence entre 5° et 15°, en formant un rétrécissement de la largeur de la surface supérieure, en outre de préférence, les arêtes (23, 24) situées de part et d'autre étant disposées absolument à des angles égaux (α₁, α₂), mais dans la direction opposée.

3. Insert de coupe selon l'une des revendications 1 ou 2, caractérisé par le fait que la largeur initiale (b₁) de la rampe de montée (20) sur le pied avant de la nervure longitudinale est comprise entre 0,0 mm et 0,5 mm, de préférence entre 0,2 mm et 0,3 mm, et s'agrandit dans la zone du maximum (21) à une largeur (b₂) qui est comprise entre 0,3 mm et 1,5 mm, de préférence elle est de 2 à 4 fois plus grande que la largeur initiale (b₁), et/ou que la distance (a₁ ) entre la nervure longitudinale (13) et le tranchant (12) est comprise entre 0,03 mm et 1 mm, de préférence entre 0,5 mm et 0,3 mm, et/ou que la longueur (a₂) de la nervure longitudinale (13) est comprise entre 1,0 mm et 8,0 mm, de préférence entre 1,5 mm et 4 mm, et que la longueur (a₃) de ladite rampe de montée (20) est comprise entre 0,3 mm et 1,5 mm, de préférence entre 0,4 mm et 0,8 mm.

4. Insert de coupe selon l'une des revendications 1 à 3, caractérisé par le fait que la rampe de montée (20) est pour l'essentiel plane et présente un angle de montée (β₁) compris entre 10° et 45°, de préférence entre 20° et 30°, par rapport à la face de coupe (19) contiguë au tranchant (12), et/ou que, dans la direction de l'axe longitudinal (14), la rampe de montée (20) est réalisée de manière concave ou convexe, et que ses surfaces tangentielles dans la zone centrale de la rampe de montée présentent des angles de montée (β₁) compris entre 10° et 45° par rapport à la face de coupe contiguë au tranchant (12).

5. Insert de coupe selon l'une des revendications 1 à 4, caractérisé par le fait que, dans la zone de son maximum (21), la nervure longitudinale (13) est réalisée de façon convexe dans le sens de son axe longitudinal (14), de préférence sous un rayon (R₁) entre 0,1 mm et 1 mm, en outre de préférence sous un rayon (R₁ ) entre 0,25 mm et 0,5 mm, et/ou que la surface supérieure (22) inclinée et se rétrécissant présente un angle d'inclinaison (β₂) entre 5° et 40°, de préférence entre 5° et 15°, par rapport à la face de coupe (19) contiguë au tranchant (12), en outre de préférence, l'angle d'inclinaison (β₂) étant égal à l'angle de coupe.

6. Insert de coupe selon l'une des revendications 1 à 5, caractérisé par le fait que les nervures longitudinales (13) présentent une surface supérieure (22) convexe ou concave, et/ou que la distance (b₃) des nervures longitudinales (13) l'une de l'autre, mesurée entre deux points marginaux voisins de maxima, est de 1,5 à 5 fois, de préférence de 1,5 à 3 fois plus grande que la largeur (b₂) des maxima (21), et/ou que la nervure longitudinale (13) présente des flancs latéraux (25, 27) contigus à la rampe de montée (20) et/ou à la surface supérieure (22), qui - vus dans la direction transversale à l'axe longitudinal (14) - s'étendent de manière concave, convexe ou pour l'essentiel plane.

7. Insert de coupe selon l'une des revendications 1 à 6, caractérisé par le fait que les flancs latéraux (25, 27), vus dans la direction transversale à l'axe longitudinal (14), présentent un angle d'inclinaison (γ₁, γ₂) par rapport à la face de coupe (19) entourant la nervure longitudinale (13) ou par rapport au plan du tranchant, qui est déterminé par la ligne de jonction entre leur pied (29, 30) sur la face de coupe (19) et le point limite (26, 24) vers la rampe de montée (20) ou vers la surface supérieure (22) et qui est compris entre 15° et 45°, de préférence entre 20° et 35°, et/ou que, dans la direction transversale à l'axe longitudinal (14), la rampe de montée (20) et/ou la surface supérieure (22) s'étendent parallèlement au tranchant (12) ou sont inclinées sous un angle positif ou négatif (δ1, δ2) allant jusqu'à 15°, de préférence elles s'étendent jusqu'à la face de coupe (19) en supprimant des flancs latéraux (25, 27) d'un côté.

8. Insert de coupe selon l'une des revendications 1 à 7, caractérisé par le fait que le tranchant (12) est suivi d'un chanfrein (17) de 0°, positif ou négatif dans la zone duquel se projette la rampe de montée (20), et/ou que le maximum (21) dépasse le tranchant (12) d'une hauteur (h₁) comprise entre 0,05 mm et 0,5 mm, de préférence entre 0,1 mm et 0,3 mm, et/ou que plusieurs nervures longitudinales (13) de disposition angulaire, de forme et de hauteur différentes sont disposées le long du tranchant (12).

9. Insert de coupe selon l'une des revendications 1 à 8, caractérisé par une face de dépouille positive (18) et/ou par le fait que les tranchants (12) sont réalisés de façon droite, convexe, concave ou ondulée.

10. Insert de coupe selon l'une des revendications 1 à 9, caractérisé par le fait que, outre les nervures longitudinales (13), il y a d'autres éléments élevés à former le copeau (37 à 39), (45, 46) ou creux à former le copeau ou rainures à former le copeau.
